# EUROPEAN PATENT APPLICATION

(11) **EP 4 832 088 A1**
(43) Date of publication of application: **28.10.2026**
(21) Application number: 24908089.6
(22) Date of filing: 18.12.2024
(51) Int. Cl.: H01M 4/36, H01M 4/38, H01M 4/48, H01M 4/62, H01M 10/052, H01M 4/02

(54) **NEGATIVE ELECTRODE MATERIAL FOR LITHIUM SECONDARY BATTERY, AND SECONDARY BATTERY COMPRISING SAME**

(30) Priority: 18.12.2023 KR 20230185198
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: CHO, Moon-Kyu, Pohang-si, Gyeongsangbuk-do 37671 (KR)
(74) Representative: Pfenning, Meinig & Partner mbB
(86) International application number: PCT/KR2024/020647
(87) International publication number: WO 2025/135806

(57) **Abstract**

The present invention relates to a negative electrode material for a secondary battery having high output, excellent cycle characteristics, and uniform electrochemical characteristics. The negative electrode material for a secondary battery, according to the present invention, comprises: a silicon-based core; and a carbon coating layer positioned on the surface of the silicon-based core, wherein the intensity ratio (I_{D}/I_{G}) of a D band peak and a G band peak in a Raman spectrum of the carbon coating layer is 1.3 or less, the ratio (F_{D}/F_{G}) of the full width at half maximum (FWHM) of the D band and G band peaks is 1.3 or more, and, in an infrared spectrum, the area (A₁) of a peak of a first wavenumber (n₁) in the range of 1400 to 1625±5 cm⁻¹ is smaller than the area (A₂) of a peak of a second wavenumber (n₂) in the range of 1625±5 to 2100 cm⁻¹ .

## Description

### Technical Field

The present disclosure relates to a negative electrode material for a secondary battery and a secondary battery including the same, and more particularly, to a negative electrode material for a secondary battery having high power output, excellent cycle characteristics, and uniform electrochemical characteristics.

### Background Art

In various industrial fields such as electronic products, electric vehicles (EVs), energy storage systems (ESS), and aerospace/drones, there is a continuously increasing demand for secondary batteries that not only possess high energy density and high power density characteristics but also have a long lifespan.

Generally, rechargeable lithium secondary batteries include positive electrode, a negative electrode, an electrolyte, and a separator. Among these, graphite is a representative negative electrode material used commercially for the negative electrode, but the theoretical maximum capacity of graphite is only 372 mAh/g.

Research has been continuously conducted to use chalcogen-based materials such as sulfur (maximum capacity: 1,675 mAh/g), silicon-based materials such as silicon (maximum capacity: 4,200 mAh/g) or silicon oxide (maximum capacity: 1,500 mAh/g), and transition metal oxides as negative electrode materials for secondary batteries in order to realize high-energy-density secondary batteries. Among these materials, silicon-based negative electrode materials have received the most attention due to their high theoretical capacity, low reaction potential with lithium, and eco-friendly materials.

However, when particulate silicon is used as a negative electrode material, battery characteristic rapidly deteriorates due to electrical isolation, particle detachment, and increased contact resistance resulting from the large volume changes of silicon during repeated charge/discharge cycling, ultimately leading to a loss of battery functionality. Meanwhile, in the case of silicon oxide, lithium is consumed by irreversible byproducts such as lithium silicate and lithium oxide, resulting in a significant decrease in initial charge/discharge efficiency.

To address these problems of silicon-based negative electrode materials, there has been disclosed a negative electrode material in which a carbon coating layer is formed on a surface of a metal-doped silicon oxide negative electrode material via chemical vapor deposition (CVD). However, such a negative electrode material requires the use of expensive hydrocarbon gases, has low economic feasibility due to low carbon conversion efficiency at high temperatures, and makes it difficult to uniformly coat a surface of silicon oxide particles during mass production. In addition, since the CVD coating process has a structure in which hydrocarbon gas is continuously supplied from the outside and heat is provided through the outer wall of a reactor, a temperature gradient inevitably occurs within the reactor.

Furthermore, since the hydrocarbon decomposition reaction is endothermic, the temperature gradient increases as the silicon oxide particles are positioned farther from the heat source, thereby reducing the uniformity of the deposited carbon coating layer.

Such non-uniformity of the carbon coating layer leads to non-uniform electrochemical characteristics of the negative electrode material, thereby adversely affecting initial charge/discharge efficiency, cycle characteristics, and lifecycle characteristics. Accordingly, there remains a need for the development of a silicon-based negative electrode material for a secondary battery that exhibits excellent initial charge/discharge efficiency, cycle performance, and lifespan, as well as high power characteristics.

### Summary of Invention

### Technical Problem

An aspect of the present disclosure is to provide a silicon-based negative electrode material for a secondary battery having improved initial charge/discharge efficiency, cycle characteristics, and lifecycle characteristics, and a lithium secondary battery including the same.

Another aspect of the present disclosure is to provide a silicon-based negative electrode material for a secondary battery having uniform electrochemical characteristics not only among different negative electrode material particles but also within each negative electrode material particle, and a lithium secondary battery including the same.

Still another aspect of the present disclosure is to provide a silicon-based negative electrode material for a secondary battery having high power characteristics, and a lithium secondary battery including the same.

### Solution to Problem

According to an aspect of the present disclosure, a negative electrode material for a secondary battery includes: a silicon-based core and a carbon coating layer positioned on a surface of the silicon-based core, in which, in Raman spectrum of the carbon coating layer, an intensity ratio (I_{D}/I_{G}) of a D-band peak to a G-band peak is 1.3 or less, and a ratio (F_{D}/F_{G}) of full width at half maximum (FWHM) of the D-band peak to the G-band peak is 1.3 or more, and in the infrared spectrum, an area (A₁) of a peak of a first wavenumber (n₁) in a range of 1400 to 1625±5 cm⁻¹ is smaller than an area (A₂) of a peak of a second wavenumber (n₂) in a range of 1625±5 to 2100 cm⁻¹.

The ratio (A₂/A₁) of the area (A₂) of the second wavenumber (n₂) to the area (A₁) of the peak of the first wavenumber (n₁) may be 2 or more.

The silicon-based core may include a silicon oxide matrix and silicon nanocrystal dispersed and embedded in the silicon oxide matrix.

The intensity ratio (I_{D}/I_{G}) may be smaller than the ratio (F_{D}/F_{G}) of the full width at half maximum.

The full width at half maximum (F_{G}) of the G band peak may be 60 cm⁻¹ or more.

The following Equation 1 may be satisfied based on a silicon Raman signal.$1 > WN \left(Si\right) / WN \left(ref\right)$ (Equation 1)
(In Equation 1, WN(ref) is a center wavenumber of the Raman peak of bulk single-crystal silicon, and WN(Si) is a center wavenumber of the Raman peak of the silicon nanocrystal contained in the negative electrode material)

The silicon-based core may have a difference between a maximum value and a minimum value of the center wavenumber WN(Si) of the Raman peak of the silicon nanocrystal, measured at 10 random and different positions, of 5 cm⁻¹ or less.

A specific surface area of the negative electrode material may be 10 m²/g or less.

The ratio (F_{D}/F_{G}) of the full width at half maximum may be 1.7 or more.

The carbon coating layer may include a plurality of carbon nanoparticles.

The carbon coating layer may include a dispersed phase including a plurality of carbon nanoparticles and a continuous phase made of carbon that physically binds the dispersed phase.

The carbon coating layer may be included in an amount of 0.5 to 8 wt% of the total weight of the negative electrode material.

The carbon coating layer may be derived from coal tar or petroleum residue oil.

A particle size D₁ of the negative electrode material may be 1.2 to 3.5 µm, and D₁₀/D₁ is 1.3 to 3.

A particle size D₉₀ of the negative electrode material may be 8.5 to 14 µm, and D₉₉/D₉₀ may be 1.1 to 2.5.

According to another aspect of the present disclosure, there is provided a secondary battery including any one of the negative electrode materials for a secondary battery. Advantageous Effects of Invention

According to an aspect of the present disclosure, the silicon-based negative electrode material for a secondary battery may have excellent initial charge/discharge efficiency, cycle characteristics, lifecycle characteristics, and excellent high power output characteristics.

According to an aspect of the present disclosure, the silicon-based negative electrode material for a secondary battery may have uniform electrochemical characteristics at any position within a single negative electrode material particle, and furthermore, have uniform electrochemical characteristics even between different negative electrode material particles.

### Brief Description of Drawings

FIG. 1 is a Raman spectroscopic analysis graph of a negative electrode material for a secondary battery according to an example embodiment of the present disclosure.
FIG. 2 is a graph showing the silicon Raman signal of the negative electrode material for a secondary battery according to an example embodiment of the present disclosure.
FIG. 3 is an FTIR analysis graph of the negative electrode material for a secondary battery according to an example embodiment of the present disclosure.
FIG. 4 is a graph showing rate capability efficiency of a battery including the negative electrode material for a secondary battery according to an example embodiment of the present disclosure.

### Best Mode for Invention

Hereinafter, the present disclosure will be described in detail with reference to the accompanying drawings. The drawings to be provided below are provided by way of example so that the spirit of the present disclosure can be sufficiently transferred to those skilled in the art. Therefore, the present disclosure is not limited to the accompanying drawings provided below, but may be modified in many different forms. In addition, the accompanying drawings suggested below will be exaggerated in order to clear the spirit and scope of the present disclosure. Technical terms and scientific terms used in the present specification have the general meaning understood by those skilled in the art to which the present disclosure pertains unless otherwise defined, and a description for the known function and configuration unnecessarily obscuring the gist of the present disclosure will be omitted in the following description and the accompanying drawings.

### Mode for Invention

Also, the singular forms used in the specification and appended claims are intended to include the plural forms as well, unless the context specifically dictates otherwise.

In this specification and the appended claims, terms such as first, second, etc. are used for the purpose of distinguishing one component from another component, not in a limiting sense.

In this specification and the appended claims, the terms "include" or "have" means that a feature or element described in the specification is present, and unless specifically limited, it does not preclude in advance the possibility that one or more other features or components may be added.

In this specification and the appended claims, when a part of a film (layer), a region, a component, etc., is on or above another part, this includes not only the case where the part is in contact with and directly on another part, but also the case where another film (layer), other regions, other components, etc., are also interposed therebetween.

In this specification, a particle size distribution refers to that measured using a laser diffraction method. To analyze the particle size distribution, the powder to be measured is dispersed in a dispersion medium and introduced into a laser diffraction particle size analyzer, and the particle size distribution is calculated by measuring differences in diffraction patterns corresponding to particle size as the particles pass through a laser beam.

The applicant discovered that, in a silicon-based negative electrode material in which a carbon coating layer is formed on a silicon-based oxide, the mechanical and electrochemical characteristics of the negative electrode material are significantly affected by Raman and infrared spectroscopic characteristics. Based on this discovery, as a result of further in-depth studies, the present disclosure has been completed by discovering that, in a negative electrode material including a silicon-based core and a carbon coating layer formed thereon, when the carbon coating layer satisfies specific conditions in Raman spectrum and infrared spectrum, the electrochemical characteristics of the negative electrode material are significantly improved.

The negative electrode material according to the present disclosure, based on the above-described findings, includes a silicon-based core and a carbon coating layer that satisfy specific features in Raman spectroscopic analysis and infrared spectroscopic analysis, and may exhibit electrochemical characteristics that cannot be achieved by conventional silicon-based negative electrode materials.

In the present disclosure, a negative electrode material for a secondary battery includes, but is not necessarily limited to, a lithium negative electrode material for a secondary battery. The negative electrode material of the present disclosure may also be utilized as an active material for secondary batteries such as sodium batteries, aluminum batteries, magnesium batteries, calcium batteries, and zinc batteries.

The negative electrode material for a secondary battery according to the present disclosure includes: a silicon-based core; and a carbon coating layer positioned on the surface of the silicon-based core, wherein the intensity ratio (I_{D}/I_{G}) of a D band peak and a G band peak in a Raman spectrum of the carbon coating layer is 1.3 or less, the ratio (F_{D}/F_{G}) of the full width at half maximum (FWHM) of the D band and G band peaks is 1.3 or more, and, in the infrared spectrum, the area (A₁) of a peak of a first wavenumber (n₁) in the range of 1400 to 1625±5 cm⁻¹ is smaller than the area (A₂) of a peak of a second wavenumber (n₂) in the range of 1625±5 to 2100 cm⁻¹.

Specifically, in the Raman spectrum of the carbon coating layer, the intensity (I_{D}) of the D band peak is the maximum intensity of the peak positioned in the wavenumber region of 1320 to 1380 cm⁻¹, and the intensity ratio I_{G} of the G band peak is the maximum intensity of the peak positioned in the wavenumber region of 1560 to 1630 cm⁻¹ in the same Raman spectrum analysis. Although not necessarily limited thereto, the Raman spectrum may be measured experimentally by using a Raman spectrometer (WITec GmbH) with a 532 nm laser at room temperature under ambient atmospheric conditions.

The infrared spectrum may be obtained by Fourier transform infrared spectroscopy (FTIR). In the infrared spectrum, first and second wavenumbers each represent a range of wavenumbers, and a point where the first and second wavenumbers separate may be defined as a position where the peaks separate near 1625 ± 5 cm⁻¹. For example, when there is one or more peaks in a wavenumber range smaller than 1625 cm⁻¹ and the peaks converge at 1625 cm⁻¹, and when there is one or more peaks in a wavenumber range larger than 1625 cm⁻¹ and the peaks similarly converge at 1625 cm⁻¹, 1625 cm⁻¹ may be defined as the position separating the peaks of the first and second wavenumbers.

A peak area may be derived by direct integration. For example, the peak area A₁ of the first wavenumber (n₁) in the range of 1400 to 1625 cm⁻¹ may be defined as the area enclosed by the infrared spectrum curve and a straight line connecting the spectral points at 1400 cm⁻¹ and 1625 cm⁻¹. Similarly, a peak area (A₂) of a second wavenumber n₂ in the range of 1625 to 2100 cm⁻¹ may be defined as the area of the region closed by the infrared spectrum curve and the straight line drawn between the position at 1625 cm⁻¹ and the position at 2100 cm⁻¹.

In the infrared spectrum curve, the peak area (A₁) of the first wavenumber n₁ is not particularly limited to being smaller than the peak area (A₂) of the second wavenumber (n₂). Without limitation, the ratio (A₂/A₁) of the peak area (A₁) of the first wavenumber n₁ and the peak area (A₂) of the second wavenumber (n₂) may be 2 or more or 3 or more, specifically 2.5 to 10, and more specifically 3 to 7.

In an example embodiment, an intensity ratio (I_{D}/I_{G}) of a D band peak to a G band peak in the Raman spectrum may be smaller than an intensity ratio (F_{D}/F_{G}) of full width at half maximum of the D band peak to the G band peak. Specifically, the intensity ratio I_{D}/I_{G} may be 1.2 or less, 1.1 or less, or 1.0 or less, and 0.5 or more without limitation. Specifically, the intensity ratio I_{D}/I_{G} may be 0.5 to 1.2, 0.6 to 1.2, or 0.7 to 1.1. In addition, the ratio (F_{D}/F_{G}) of the full width at half maximum may be 1.4 or more, 1.5 or more, or 1.7 or more, and may be 2.5 or less without limitation. Specifically, the ratio (F_{D}/F_{G}) may be 1.3 to 2.5, 1.4 to 2.5, 1.5 to 2.5, 1.7 to 2.5, or 1.9 to 2.5.

In an example embodiment, in a Raman spectrum, the Raman intensity ratio (I_{D}/I_{G}) may be 0.5 to 1.2 and the ratio (F_{D}/F_{G}) of the full width at half maximum may be 1.3 to 2.5, the Raman intensity ratio (I_{D}/I_{G}) may be 0.6 to 1.1 and the ratio (F_{D}/F_{G}) of the full width at half maximum may be 1.7 to 2.5, or the Raman intensity ratio (I_{D}/I_{G}) may be 0.7 to 1.1 and the ratio (F_{D}/F_{G}) of the full width at half maximum may be 1.9 to 2.5, all of which may be satisfied simultaneously.

As such, the silicon-based negative electrode material for a secondary battery satisfying the above-described characteristics in the Raman spectrum and infrared spectrum may not only have a silicon-based core and a carbon coating layer that are much more organically bonded than silicon-based negative electrode materials known in the art, but also possess excellent carbon film quality. Accordingly, the silicon-based negative electrode material for a secondary battery according to the present disclosure has significantly improved electrochemical characteristics, and thus may exhibit excellent initial charge/discharge efficiency, cycle characteristics, and lifecycle characteristics.

In an example embodiment, the full width at half maximum F_{G} of the G band peak may be 60 cm⁻¹ or more, 80 cm⁻¹ or more, 90 cm⁻¹ or more, 95 cm⁻¹ or more, or 100 cm⁻¹ or more, and may be 130 cm⁻¹ or less without limitation. More specifically, the full width at half maximum F_{G} may be 60 to 130 cm⁻¹, 80 to 120 cm⁻¹, or 95 to 110 cm⁻¹.

In an example embodiment, the specific surface area of the negative electrode material according to the present disclosure may be 10 m²/g or less, specifically 5 m²/g or less, and more specifically 0.5 to 5 m²/g. Accordingly, the negative electrode material for a secondary battery according to the present disclosure may suppress irreversible side reactions and reduce the adsorption of the electrode binder, thereby having improved electrical characteristics.

The silicon-based core may include a silicon component in an elemental silicon state and a silicon component in an oxide state, and the silicon component in an oxide state may refer to an oxide state of silicon alone. The silicon oxide may satisfy SiOₓ (where x is a real number greater than 0.1 and less than 2, specifically a real number greater than 0.3 and less than 1.8), and may include a first silicon oxide and a second silicon oxide having different x values.

In an example embodiment, the silicon-based core may include a silicon oxide matrix and silicon nanocrystals dispersed and embedded on the silicon oxide matrix. However, the present disclosure does not exclude an embodiment in which only a silicon oxide matrix is included as a silicon-based core, without substantially including silicon nanocrystals.

In an example embodiment, the silicon-based core may contain silicon nanocrystals in an amount of 1 to 70 wt%, 2 to 60 wt%, 5 to 50 wt%, or 10 to 50 wt% based on the total weight of the silicon-based core, and may contain the balance being a silicon oxide matrix.

The silicon oxide matrix may refer to a solid medium in which the silicon nanocrystals are dispersed and embedded, and may refer to a material that forms a continuous phase relative to the silicon nanocrystals, which are the dispersed phase in the negative electrode material. In this specification, the matrix may refer to a material in the negative electrode material excluding silicon (Si) nanocrystals.

For example, the silicon oxide contained in the silicon oxide matrix may satisfy SiO_{y} (where y is a real number from 0.5 to 2, specifically from 1.2 to 2), and y defined as SiOy may have a larger value than x defined as SiOₓ.

The silicon oxide matrix may be crystalline, amorphous, or a composite phase in which the crystalline and amorphous phases are mixed. Specifically, the matrix may be crystalline or a composite phase in which the crystalline and amorphous phases are mixed. In addition, the silicon included in the silicon oxide matrix may include silicon with a valence corresponding to one or more combinations selected from the group consisting of Si¹⁺, Si²⁺, Si³⁺ and Si⁴⁺.

The silicon nanocrystal may have a size (diameter) that is typically defined as a nanocrystal. Practically, the silicon nanocrystal may have a diameter of 100 nm or less, 50 nm or less, 20 nm or less, or 15 nm or less, and may refer to crystals having a diameter of, for example, 1 to 20 nm, 1 to 15 nm, or 1 to 10 nm. The size of the silicon nanocrystal may be calculated by substituting the full width at half maximum of the Si (111) crystal plane measured by X-ray diffraction into the Scherrer equation.

The carbon coating layer is a carbon film coated on a surface of the silicon-based core, and may protect the silicon-based core and suppress volume changes of silicon therein, and may impart excellent conductivity and electrochemical characteristics despite having a near-amorphous nature.

In an example embodiment, the carbon coating layer may be an amorphous carbon layer. The amorphous carbon layer may stably wrap the surface of the core to prevent volume changes of silicon.

In an example embodiment, the carbon coating layer may be included in an amount of 0.5 to 8 wt%, specifically 0.5 to 6 wt%, of the total weight of the negative electrode material.

The thickness of the carbon coating layer is not particularly limited, but the average thickness of the carbon coating layer may be 1 to 200 nm, 1 to 150 nm, 1 to 100 nm, 2 to 50 nm, 3 to 30 nm, or 5 to 15 nm. Experimentally, the thickness of the carbon coating layer may take an average value obtained by measuring the thickness of the carbon coating layer at 10 or more randomly selected locations, substantially 10 to 20 locations, using images obtained by transmission electron microscopy (TEM), scanning transmission electron microscopy (STEM), or the like. Within the above range, the surface of the core may be stably wrapped while minimizing the electrical resistance component.

In an example embodiment, the carbon coating layer may include a plurality of carbon nanoparticles. The carbon nanoparticles may have at least a portion of the carbon nanoparticles positioned in one or more of an interior and a surface of the carbon coating layer.

Specifically, the carbon coating layer may be composed of the dispersed phase and the continuous phase. Within the carbon coating layer, a plurality of carbon nanoparticles may form the dispersed phase, and the continuous phase composed of carbon may be formed by physically binding the dispersed phase. Although the dispersed phase and the continuous phase are common in that they are composed of carbon, they may be distinguished as different phases within the carbon coating layer. For example, when observed through the scanning electron microscope (SEM), the dispersed phase may be visually identifiable in an image obtained from a fracture surface analysis of the negative electrode material.

Carbon nanoparticles may be primary carbon particles or secondary particles that are aggregates of primary particles, and the primary and secondary particles may exist individually or mixed together in the carbon coating layer.

Specifically, the carbon nanoparticles may be in one or more of the following states: embedded within the carbon coating layer while being in contact with the core; partially protruding from the surface of the carbon coating layer while being in contact with the core; partially embedded within the carbon coating layer with a remaining portion protruding from a surface of the carbon coating layer; or bound to the surface of the carbon coating layer.

In this way, the electrical conductivity of the surface of the carbon coating layer containing carbon nanoparticles exposed to the outside may be improved, and side reactions with the electrolyte may be suppressed. In addition, the resistance component (contact resistance) between the negative electrode material particles may be lowered, and the stable and smooth electrical contact between the negative electrode material particles may be maintained.

The carbon nanoparticles may be spherical or elliptical, but are not limited to a specific shape; specifically, they may be in the shape of spherical beads. The average particle size of the carbon nanoparticles is not specifically limited, but may be 2 nm to 1 µm, specifically 5 to 0.5 µm, and more specifically 5 to 200 nm. Such carbon nanoparticles are relatively coarse compared to the thickness of the carbon coating layer, so they may provide stable contact between the negative electrode materials even when the volume of the negative electrode material changes due to silicon. In this case, the ratio of the surface area occupied by carbon nanoparticles on the surface of the particulate negative electrode material may be 30% or more, specifically 50% or more, and more specifically 70% or more and less than 100%. Experimentally, the ratio of the area occupied by the carbon nanoparticles may be obtained using images acquired by transmission electron microscopy (TEM) or scanning electron microscopy (SEM), by assuming a virtual film having the same thickness as the carbon coating layer and completely covering the core without carbon nanoparticles, calculating a total surface area of the virtual film, and measuring an area occupied by the carbon nanoparticles on the virtual film.

Preferably, the carbon coating layer may be derived from a liquid carbon precursor. The liquid carbon precursor may refer to a carbon precursor that is liquid at room temperature, for example, 25°C, and may be a polycyclic aromatic compound with an average molecular weight of 100 to 2,000 Da, specifically 100 to 1,000 Da, as measured by MALDI-TOF.

The carbon precursor may be a compound with a polycyclic aromatic structure having three or more aromatic rings. Specifically, it may be a polycyclic aromatic structure composed of 3 to 10 aromatic rings, but is not limited thereto.

As a non-limiting example, the liquid carbon precursor may contain sulfur. The sulfur-containing liquid carbon precursor may induce doping of the carbon coating layer with sulfur during the carbonization process and enable the formation of a carbon coating layer with improved conductivity due to sulfur. Examples of the sulfur-containing liquid carbon precursor may include coal tar or petroleum residual oil, and more specifically, coal tar.

In an example embodiment, the negative electrode material for a secondary battery according to the present disclosure may satisfy the following Equation 1 based on a silicon Raman signal.$1 > WN \left(Si\right) / WN \left(ref\right)$ (Equation 1)
(In Equation 1, WN(ref) is a center wavenumber of the Raman peak of bulk single-crystal silicon, and WN(Si) is a center wavenumber of the Raman peak of the silicon nanocrystal contained in the negative electrode material)

Experimentally, the Raman spectrum of silicon contained in the negative electrode material may be measured under the conditions of room temperature (20 to 25°C), atmospheric pressure, an excitation laser wavelength of 532 nm, a laser power of 0.5 mW, a spectrometer resolution of 1 cm⁻¹, 1 g of negative electrode material, and a detector exposure time of 15 s.

In Equation 1, the ratio of the center wavenumber of the Raman peak of bulk single-crystal silicon to the center wavenumber of the Raman peak of silicon nanocrystals contained in the negative electrode material is a parameter indicating the type and magnitude of residual stress (residual stress) remaining in the silicon nanoparticles dispersed and embedded in the matrix.

In Equation 1, the term "bulk single-crystal silicon" should be interpreted to mean silicon of a size in which the physical properties of bulk single-crystal silicon are substantially exhibited. To provide a clear comparison standard and ensure ease of purchase, bulk single-crystal silicon may refer to a single-crystal silicon wafer with a thickness in a sub-mm order, specifically, as an example, a thickness of 0.4 to 0.7 mm.

In Equation 1, WN(Si)/WN(ref) being less than 1 implies that the center wavenumber of the Raman peak of the silicon nanocrystals contained in the negative electrode material has shifted to a shorter wavenumber compared to bulk single-crystal silicon, and signifies that the silicon nanocrystals have residual tensile stress.

In Equation 1, the Raman peak of silicon in bulk single-crystal silicon and silicon nanocrystals, respectively, may refer to a Raman peak positioned in the 450 to 540 cm⁻¹, 480 to 530 cm⁻¹, 500 to 525 cm⁻¹, or 510 to 520 cm⁻¹ regions of the silicon Raman spectrum. The central wavenumber of the peak, that is, the wavenumber corresponding to the center of the peak, may refer to the wavenumber having the maximum intensity value at the peak. In this case, when two or more Raman peaks are present in the above-described Raman shift region, the peak having the highest intensity may correspond to the silicon Raman peak of Equation 1; and when two or more Raman peaks overlap to form a doublet shape, the wavenumber at which the intensity is maximized in the higher-intensity peak of the doublet may correspond to the central wavenumber of the peak.

The full width at half maximum of the Raman peak of the silicon nanocrystals contained in the above-described negative electrode material may be greater than the full width at half maximum of the Raman peak of bulk single-crystal silicon. The larger full width at half maximum value compared to the bulk single-crystal silicon may be due to the structure in which the silicon contained in the negative electrode material is dispersed and embedded in the matrix as ultrafine particles.

Specifically, the full width at half maximum of the Raman peak of the silicon nanocrystal contained in the negative electrode material may be 4 to 25 cm⁻¹, 5 to 22 cm⁻¹, 6 to 20 cm⁻¹, 6 to 18 cm⁻¹, or 8 to 15 cm⁻¹. In this case, the Raman peak of the silicon nanocrystal contained in the negative electrode material may refer to a single peak rather than a deconvolutional peak.

As described above, the silicon-based core refers to silicon oxide represented by SiOx (where x is a real number greater than 0.1 and less than 2, specifically a real number greater than 0.3 and less than 1.8), and may be undoped with metal. Generally, a technique is known for doping silicon oxide-based negative electrode materials with metals such as lithium or magnesium to suppress the formation of lithium oxide, which causes initial irreversibility during the charging and discharging of a secondary battery. The metal-doped silicon oxide-based negative electrode materials improve initial charge/discharge efficiency by converting lithium oxide, which does not participate in electrochemical reactions, into an irreversible phase. They not only improve cycle characteristics by reducing the size of silicon nanocrystals, but also enable the silicon nanocrystals to exhibit generally uniform properties as the matrix is converted into a metal-silicon oxide. For example, the size, crystal, and stress characteristics of silicon nanocrystals may be more uniform and significantly improved in a metal-doped silicon oxide matrix compared to a silicon oxide matrix.

In contrast, the negative electrode material for a secondary battery according to the present disclosure has a technical advantage in that the size of silicon nanocrystals may be controlled to be very small despite not being metal-doped, while the crystal and stress characteristics may be maintained at a level equivalent to that of a metal-doped silicon oxide matrix. As described above, the full width at half maximum of the Raman peak of the silicon nanocrystals contained in the negative electrode material exhibits a low value, thereby allowing the size of the silicon nanocrystals to be controlled to be very small, and the stress applied to the silicon nanocrystals to be uniformly controlled.

According to an example embodiment, the difference between the maximum and minimum values of the center wavenumber WN(Si) of the Raman peak of the silicon nanocrystal at 10 randomly different locations of the silicon-based core may be 10 cm⁻¹ or less, 8 cm⁻¹ or less, 6 cm⁻¹ or less, and 1 cm⁻¹ or more, and may be 1 to 10 cm⁻¹, 2 to 8 cm⁻¹, or 2 to 6 cm⁻¹.

In this case, the standard deviation of the maximum and minimum values of the center wavenumber WN(Si) of the Raman peak of the silicon nanocrystal may be 5 cm⁻¹ or less, 3 cm⁻¹ or less, 2 cm⁻¹ or less, 1.5 cm⁻¹ or less, and 0.1 cm⁻¹ or more, and may be 0.1 to 5 cm⁻¹, 0.1 to 3 cm⁻¹, 0.1 to 2 cm⁻¹, or 0.1 to 1.5 cm⁻¹.

The small difference between the maximum and minimum values means that the stress applied to the silicon nanocrystal contained in the negative electrode material is nearly constant and uniform. Furthermore, it means that the magnitude of the residual tensile stress in all silicon nanocrystals dispersed in the silicon oxide matrix is substantially nearly the same.

In addition, as defined in Equation 1, it indicates that most silicon nanocrystals dispersed in the silicon oxide matrix have residual tensile stress, and further indicates that the magnitude of the residual tensile stress remaining in most of the silicon nanocrystals dispersed in the silicon oxide matrix is substantially the same. As a specific example, the ratio of residual tensile stress measured in the silicon nanocrystals at different locations may be 80% or more, 90% or more, or 95% or more, and may be 90% to 100%, 95% to 100%, or 98% to 100%.

The negative electrode material for a secondary battery according to the present disclosure has uniform electrochemical characteristics at any location even within a single negative electrode material particle, and furthermore, has uniform electrochemical characteristics between different negative electrode material particles, thereby having excellent rate capability. In detail, the negative electrode material for a secondary battery according to the present disclosure may have an average capacity retention rate of 88% or more, 90% or more, specifically 93% or more, and more specifically 97% or more within 3 to 30 charge/discharge cycles.

In addition, the initial charge/discharge efficiency of the negative electrode material according to the present disclosure may be 75% or more, and the initial discharge capacity may be 1,700 mAh/g or more.

The negative electrode material for a secondary battery according to the present disclosure is provided in a particulate phase. Specifically, the negative electrode material may be a particle selected from one or more primary particles and secondary particles. That is, the negative electrode material may be primary particles, secondary particles, or particles mixed with primary and secondary particles. The primary particle may refer to a single particle, and the secondary particle may refer to an aggregate formed by the aggregation of two or more particles.

An average particle size D₅₀ of the negative electrode material is not specifically limited. The average particle size may refer to the volume-based median diameter D₅₀ calculated by the laser diffraction method. The volume-based D₅₀ refers to the particle size at the point where the cumulative volume percentage is 50 volume% in a cumulative distribution curve accumulated in order of particle diameter. Experimentally, the cumulative distribution curve including D₅₀ may be obtained by the conventional particle size analyzer using the laser diffraction method or the dynamic light scattering method.

The D₅₀ value of the negative electrode material may be 1 µm to 20 µm, specifically 1 µm to 10 µm, more specifically 2 to 10 µm, and even more specifically 3 to 8 µm.

In this case, the D₁ particle size of the negative electrode material is 1.2 to 3.5 µm, specifically 1.5 to 3 µm, and more specifically 1.7 to 2.8 µm, and D₁₀/D₁ may be 1.3 to 3, 1.3 to 2, 1.3 to 1.7, and specifically 1.35 to 1.6.

As the values of the D₁ particle size and D₁₀/D₁ satisfy the above conditions, the initial efficiency and output characteristics of the battery may be improved by improving the composite density of the electrode without causing excessive side reactions with the electrolyte.

In addition, the D₉₀ particle size of the negative electrode material may be 8.5 to 14 µm, and specifically 9 to 13 µm, and the D₉₉/D₉₀ may be 1 to 2.5, specifically 1.1 to 2.3, and more specifically 1.1 to 2.1.

As the values of the D₉₀ particle size and D₉₉/D₉₀ satisfy the above conditions, an appropriate balance is achieved between the composite density of the electrode and the expansion of the electrode, thereby improving the output characteristics and lifecycle characteristics of the battery.

Similar to the definition of the average particle size D₅₀ of the negative electrode material, the D₁, D₁₀, D₉₀, and D₉₉ refer to the particle sizes at points where the cumulative volume% on the cumulative distribution curve is 1, 10, 90, and 99 vol%, respectively, based on volume.

The negative electrode material described above is in the form of particles having a relatively uniform particle size distribution, and, while ensuring stable conductivity during formation of a negative electrode composite layer, can reduce the diffusion time of metal ions involved in charge and discharge, for example, lithium ions, thereby exhibiting improved and more stable charge/discharge cycle characteristics.

The negative electrode material for a secondary battery according to the present disclosure may be obtained through S1) a step of manufacturing a silicon-based core and S2) a step of forming a carbon coating layer.

S1) The step of preparing the silicon-based core is not particularly limited as long as it is a method for preparing silicon-based particles used as an active material, and may involve obtaining and using commercially available silicon oxide, SiOₓ (where x is a real number greater than 0.1 and less than 2, specifically greater than 0.3 and less than 1.8), or may involve preparation by vaporizing Si and SiO₂.

As a specific example, step S1) includes a) a step of obtaining a mixed raw material by mixing metallic silicon powder (Si) and silicon dioxide powder (SiO₂); b) a step of forming the mixed raw materials into pellets; c) a step of heating and vaporizing the pellets under vacuum conditions to obtain gaseous silicon oxide gas; and d) a step of condensing the gaseous silicon oxide gas onto a heated collection plate to obtain a silicon-based core, which is silicon oxide (SiOₓ).

In step a), the molar ratio of Si to SiO₂ being mixed may be 6:1 to 7, specifically 6:2 to 6, and more specifically 6:3 to 5. The mixing may be performed by introducing Si and SiO₂ into a powder mixer and then homogeneously mixing them.

Step b) is a step of forming the mixed raw materials into pellets, which may be performed, for example, by molding the mixed raw materials into a pellet mold. The step c) is a step of vaporizing the pellets, and the temperature during heating and vaporization may be 1,000 to 1,700°C, specifically 1,200 to 1,600°C, and more specifically 1,300 to 1,500°C, and may be performed under reduced pressure conditions. The step d) is a step of condensing gaseous silicon oxide gas to obtain particulate silicon oxide, and may be performed by maintaining the temperature of the aggregation plate at 300 to 1,200°C, and specifically 400 to 1,000°C.

In an example embodiment, step S1) may further include a step of grinding the obtained silicon-based core after step d). The grinding may be performed using a grinding device such as a jet mill, and the crushed silicon-based core may be recovered through a cyclone after crushing at a high rotational speed. By appropriately controlling the central particle size D50 and distribution of the silicon-based core through the grinding, the central particle size D50 and distribution of the negative electrode material may be easily controlled.

Step S2) is a step of forming a carbon coating layer on a silicon-based core, which is silicon oxide prepared in step S1).

Step S2) includes f) a step of mixing a liquid carbon precursor with the silicon oxide obtained in step S1) to obtain a mixture; and g) a step of carbonizing the mixture.

The mixing ratio of silicon oxide and the liquid carbon precursor in step f) is not particularly limited. For example, the mixing ratio of silicon oxide to carbon precursor may be mixed in a weight ratio of 20 to 0.5 to 1, and specifically 15 to 1 to 1. The liquid carbon precursor introduced may advantageously be a sulfur-containing carbon precursor, and as described above, may be coal tar or petroleum residue oil in a liquid state at room temperature. In step f), the mixing time may be appropriately adjusted in proportion to the amount of mixture being mixed, and may be mixed at a linear velocity of 5 to 40 m/s, specifically 10 to 30 m/s, but is not limited thereto.

Step g) is a step of carbonizing the mixture, and is not particularly limited as long as it is a method capable of forming a carbon coating layer on silicon oxide by carbonizing a carbon precursor. Specifically, carbonization may be performed for 0.5 to 3 hours and 0.6 to 2 hours at a temperature of 700 to 1,500°C and specifically 800 to 1,200°C.

The carbonization in step g) may be performed as a multi-stage carbonization step. Specifically, the carbonization may be performed in n carbonization steps, wherein n is a natural number greater than 1. As a non-limiting example, when n is 3, the carbonization may include: performing a first carbonization step under a first temperature condition after reaching the first temperature condition; performing a second carbonization step under a second temperature condition after reaching the second temperature condition; and performing a third carbonization step under a third temperature condition after reaching the third temperature condition. The first to third temperatures may all have different values, or two temperatures may have the same value, but all three temperatures do not have the same value. The negative electrode material prepared in step g) above may be naturally cooled from room temperature (20±5°C) to room temperature.

In an example embodiment, after step g), a step of disintegrating the obtained negative electrode material may be further included.

The disintegration may be performed through various mechanical means, and mechanical shear force may be applied within a device such as a pin mill to uniformly control the thickness and characteristics of the carbon coating layer, and at the same time, the central particle size D50 and distribution of the negative electrode material may be easily controlled. The disintegration step may not need to be performed when the content of the carbon precursor relative to the silicon oxide is low. However, when the content of the carbon precursor relative to the silicon oxide is high, it may be desirable to further perform a disintegration step, as the additional disintegration step may improve cycle characteristics and lifecycle.

The present disclosure provides a negative electrode containing the negative electrode material described above. The negative electrode may be a negative electrode for a secondary battery, and specifically a negative electrode for a lithium secondary battery. The negative electrode may include a current collector and a negative electrode composite layer positioned on at least one surface of the negative electrode current collector and containing the negative electrode material described above.

According to an example embodiment, the negative electrode composite layer containing the negative electrode material may further include a carbon-based negative electrode active material. The carbon-based negative electrode active material may be one or more selected from artificial graphite, natural graphite, and hard carbon, but the present disclosure is not limited thereto.

For example, the weight ratio of the negative electrode material to the carbon-based negative electrode active material according to an example embodiment included in the negative electrode composite layer may be 1:99 to 99:1, specifically 5:95 to 95:5, more specifically 5:95 to 50:50, and even more specifically 5:95 to 20:80.

The negative electrode for the secondary battery described above may be manufactured by coating and drying a slurry comprising a negative electrode material, a binder, a conductive material, and a solvent according to the example embodiments described above onto the negative electrode current collector. A method for manufacturing a negative electrode is known in the art, and any known method for manufacturing the negative electrode may be used without limitation.

Examples of the conductive material may include, but are not limited to, carbon-based conductive materials such as carbon black, ultrafine graphite particles, acetylene black, graphene, carbon nanotubes, or carbon nanofibers.

The binder may include one or more combinations selected from the group consisting of styrene-butadiene rubber (SBR), fluoropolymer, ethylene-propylene rubber, butyl acrylate rubber, butadiene rubber, isoprene rubber, acrylonitrile rubber, acrylic rubber, silane rubber, polyacrylic acid (PAA), copolymers containing acrylic acid structural units, polyvinyl alcohol (PVA), and copolymers containing vinyl alcohol structural units. Specifically, the binder may be a copolymer containing polyacrylic acid (PAA) or acrylic acid structural units.

The present disclosure provides a secondary battery including the negative electrode described above.

A secondary battery according to an example embodiment may be a lithium secondary battery, and the lithium secondary battery may include a positive electrode, a negative electrode, a separator interposed between the positive electrode and the negative electrode, and an electrolyte.

The positive electrode may include a positive electrode current collector and a positive electrode composite layer positioned on at least one surface of the current collector.

The positive electrode composite layer includes a positive electrode material as a main component and may include, for example, a Li compound including one or more metals selected from the group consisting of Ni, Co, Mn, Al, Cr, Fe, Mg, Sr, V, La, and Ce, and one or more non-metal elements selected from the group consisting of O, F, S, and P. The positive electrode composite layer may include positive electrode material particles having a size of 0.01 µm to 200 µm, and may be appropriately selected according to the required characteristics of the battery.

The positive electrode may be manufactured by coating and drying a slurry including a positive electrode material, a binder, a conductive material, and a solvent as described above in the embodiments onto a positive electrode current collector. The method of manufacturing an electrode is known in the art, and any known method of manufacturing an electrode may be used without limitation.

Examples of the conductive material may include, for instance, carbon-based conductive materials such as carbon black, ultrafine graphite particles, acetylene black, graphene, carbon nanotubes, or carbon nanofibers, or nano metal particle pastes, but are not limited thereto.

The positive electrode current collector serves to support the positive electrode composite layer. Examples of the positive electrode current collector may include aluminum foil, nickel foil, or a combination thereof, but are not limited thereto.

The separator separates the positive electrode and the negative electrode and provides a pathway for the movement of lithium ions; any separator commonly used in lithium secondary batteries may be used. That is, the separator that has high lithium mobility for the movement of electrolyte ions and excellent electrolyte wettability may be used. The separator may be selected from, for example, glass fiber, polyester, polyethylene, polypropylene, polytetrafluoroethylene, or a combination thereof, and may be in the form of a nonwoven fabric or a microporous membrane. Meanwhile, when a solid electrolyte is used as the electrolyte, the conventional separator may not be included, and the solid electrolyte may serve as the separator.

The lithium secondary battery may first be assembled into an electrode assembly including a positive electrode, a negative electrode, and a separator positioned between the negative electrode. The electrode assembly is wound or folded and received in a battery container. The battery container may have a shape such as a cylindrical, prismatic, pouch, or coin type. The electrolyte may be injected into the battery container and sealed to complete the lithium secondary battery.

As the electrolyte injected into the lithium secondary battery, a non-aqueous electrolyte or a solid electrolyte may be selected as an electrolyte that conducts active ions involved in the charging and discharging of the battery, for example, lithium ions.

The non-aqueous electrolyte may include a lithium salt and an organic solvent. For example, the lithium salt may be any one selected from the group consisting of anions F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

As for the organic solvent, those commonly used in electrolytes for lithium secondary batteries may be used without limitation. For example, any one or a combination of two or more selected from the group consisting of propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran may be used.

The solid electrolyte may be, for example, a gel-type polymer electrolyte formed by impregnating an electrolyte into a polymer such as polyethylene oxide or polyacrylonitrile, or an inorganic solid electrolyte such as LiI or Li₃N.

Meanwhile, the secondary battery according to an example embodiment may be a half-cell.

The half-cell may be a cell including: a negative electrode current collector and a negative electrode positioned on at least one surface of the current collector and including a negative electrode material according to an example embodiment; a counter electrode which is a metal lithium foil; a separator interposed between the negative electrode and the counter electrode; and an electrolyte. For example, the electrolyte may be a mixture in which LiPF₆ is dissolved at a concentration of 1M in a mixed solvent in which ethylene carbonate and ether methyl carbonate are mixed in a volume ratio of 1:1.

The negative electrode material according to the present disclosure is not limited to lithium secondary batteries and may also be utilized as an active material for secondary batteries such as sodium batteries, aluminum batteries, magnesium batteries, calcium batteries, and zinc batteries.

In addition, the present disclosure provides a power source equipped with a secondary battery including a negative electrode material according to an example embodiment. Examples of power sources include a battery module, a battery pack, and an energy storage system (ESS), etc., but are not limited thereto.

Hereinafter, embodiments of the present disclosure will be described in detail. However, this is presented as an example and is not intended to limit the present disclosure, and the present disclosure is defined only by the scope of the claims set forth below.

### <Example 1>

### 1) Preparation of Silicon Oxide (SiOx)

Powdered Si and SiO₂ were introduced into a powder mixer at a molar ratio of 6.5:3.5 and homogeneously mixed to prepare a mixed raw material. Thereafter, this mixed raw material was then molded using a mold to prepare pellets.

26 kg of pellets were placed in a crucible inside a vacuum chamber with a pressure of 0.1 torr or less, heated to 1,400°C to vaporize, and then condensed onto a collection plate maintained at 900°C (±25°C) to obtain solid silicon oxide (SiOₓ). The obtained solid silicon oxide was coarsely ground using a grinder and then finely ground using an air jet mill to obtain finely powdered silicon oxide (SiOₓ) with a center particle size D₅₀ of 5.6 µm.

### 2) Formation of Carbon Coating Layer

As a sulfur-containing liquid carbon precursor, roomtemperature liquid coal tar (specific gravity = 1.1 to 1.3 g/cc, carbonization yield of approximately 25%, upon carbonization at 900°C), which is generated during the coking of raw coal in steel mills, was used.

The finely powdered silicon oxide obtained in 1) : coal tar were introduced into a planetary mixer maintained at 37°C (±3°C) in a weight ratio of 10:1 and mixed at a linear velocity of 0.6 m/s for 1 hour to obtain a mixture. Thereafter, 5 kg of the mixture was loaded into a graphite crucible, and after reaching 900°C in a nitrogen atmosphere, 900°C was maintained for 40 minutes. Then, the temperature inside the crucible was raised again to reach 930°C and then maintained at 930°C for 10 minutes. Then, the inside of the crucible was naturally cooled to 900°C and maintained at 900°C for 10 minutes. Thereafter, a particulate negative electrode material was prepared by naturally cooling to room temperature (20±5°C). A specific surface area (SSA, m²/g) of the negative electrode material was measured using a specific surface area measuring device (BELSORP-mino II) via BET analysis based on the amount of nitrogen gas adsorbed, and the average particle size was measured using a laser diffraction particle size measuring device (Microtrac S3500), and the results are listed in Table 1 below.

### <Example 2>

In the above Example 1, a negative electrode material was prepared in the same manner as in Example 1, except that the attained temperature of the graphite crucible was different. Specifically, after reaching 950°C in the graphite crucible into which the mixture was introduced, the temperature was maintained at 950°C for 40 minutes, then the temperature inside the crucible was raised again to reach 980°C and maintained at 980°C for 10 minutes, and finally, the inside of the crucible was naturally cooled to 950°C and maintained at 950°C for 10 minutes.

### <Example 3>

In the above Example 1, a negative electrode material was prepared in the same manner as in Example 1, except that the attained temperature of the graphite crucible was different. Specifically, after reaching 1000°C in the graphite crucible into which the mixture was introduced, the temperature was maintained at 1000°C for 40 minutes, then the temperature inside the crucible was raised again to reach 1030°C and maintained at 1030°C for 10 minutes, and finally, the inside of the crucible was naturally cooled to 1000°C and maintained at 1000°C for 10 minutes.

### <Example 4>

In Example 1 above, a negative electrode material was prepared in the same manner as in Example 1, except that the finely powdered silicon oxide : coal tar obtained in 1) was added in a weight ratio of 5:1, and the prepared particulate negative electrode material was fed into a feed-classifying mill (ACM) and disintegrated to an average particle size D₅₀ of 5.8 µm.

### <Example 5>

In the above Example 1, a negative electrode material was prepared in the same manner as in Example 1, except that the attained temperature of the graphite crucible was kept constant. Specifically, the graphite crucible into which the mixture was fed was reached to 900°C and then maintained for 1 hour.

### <Comparative Example 1>

In the above Example 1, a negative electrode material was prepared in the same manner as in Example 1, except that in step 2), 50 g of silicon oxide (SiOₓ) powder was loaded into a thermal CVD apparatus maintained at 900°C, and methane and argon were continuously supplied into the apparatus at 1 L/min each to perform carbon deposition for 2 hours.

### <Comparative Example 2>

In the above Example 1, a negative electrode material was prepared in the same manner as in Example 1, except that in step 2), 50 g of silicon oxide (SiOₓ) powder was loaded into a thermal CVD apparatus maintained at 950°C, and methane and argon were continuously supplied into the apparatus at 1 L/min each to perform carbon deposition for 2 hours.

### <Comparative Example 3>

In the above Example 4, a negative electrode material was prepared in the same manner as in Example 4, except that pulverization was not performed.

**[Table 1]**

| Division | | Carbonization Method | Carbonization Temperature for Each Stage (°C) | | | C-content **(%)** | **SSA** | **PSD(Particle Size Distribution, µm)** | | | | | |
|---|---|---|---|---|---|---|---|---|---|---|---|---|---|
| | | | First Stage | Second Stage | Third Stage | | **(m²/g)** | **D₁** | **D₁₀** | **D₅₀** | **D₉₀** | **D₉₉** | **Span** |
| Example 1 | | CT, Multi-stage | 900 | 930 | 900 | 2.5 | 1.3 | 1.9 | 2.8 | 5.9 | 9.8 | 13.1 | 1.2 |
| Example 2 | | CT,Multi-stage | 950 | 980 | 950 | 2.4 | 1.4 | 2.1 | 3 | 6.2 | 11.1 | 15.9 | 1.3 |
| Example 3 | | CT, Multi-stage | 1000 | 1030 | 1000 | 2.2 | 1.4 | 2.1 | 3.2 | 6.4 | 12.9 | 27 | 1.5 |
| Example 4 | | CT,Multi-stage, Disintegration | 900 | 930 | 900 | 4.7 | 1.8 | 2.1 | 3.3 | 5.8 | 9.6 | 12 | 1.1 |
| Example 5 | | CT | 900 | | | 2.4 | 1.3 | 1.8 | 2.9 | 5.7 | 9.9 | 12.9 | 1.3 |
| Comparative Example 1 | | CVD | 900 | | | 2.9 | 3.7 | 0.8 | 1.6 | 6.5 | 11.6 | 14 | 1.5 |
| Comparative Example 2 | | CVD | 950 | | | 2.5 | 4.7 | 1.1 | 1.9 | 6.8 | 13.6 | 33.1 | 1.7 |
| | • CT: Formation of carbon coating layer through coal lar | | | | | | | | | | | | |
| | • CVD: Formation of carbon coating layer through chemical vapor deposition (CVD) | | | | | | | | | | | | |
| | • Multi-stage: Carbonization including two or more heat treatment steps | | | | | | | | | | | | |

Referring to Table 1 above, it was confirmed that the negative electrode material according to the present disclosure has a relatively small specific surface area of less than 2 m²/g compared to Comparative Examples 1 and 2. In particular, it was confirmed that Examples 1 to 3 have a value of less than 1.5, which is smaller than the minimum value of 1.7 in the Comparative Examples.

### [Measurement of Physical Properties of Negative Electrode Material]

### 1. Raman Spectroscopic Analysis

Under the following analysis conditions, the Raman spectrum of the carbon coating layer of the negative electrode material according to Example 4 and Comparative Examples 1 and 2 was measured at 10 randomly different positions using µ-Raman (Instrument name: XperRam C, Nanobase, Korea). Additionally, the silicon Raman signal of the negative electrode material according to Example 1, Example 4, and Comparative Example 1 was measured at 10 randomly different positions of the negative electrode material.

Analysis conditions: laser wavelength 532 nm, laser power 0.5 mW, spectrometer resolution 1 cm⁻¹, powdered negative electrode material 1 g, detector exposure time 15 sec.

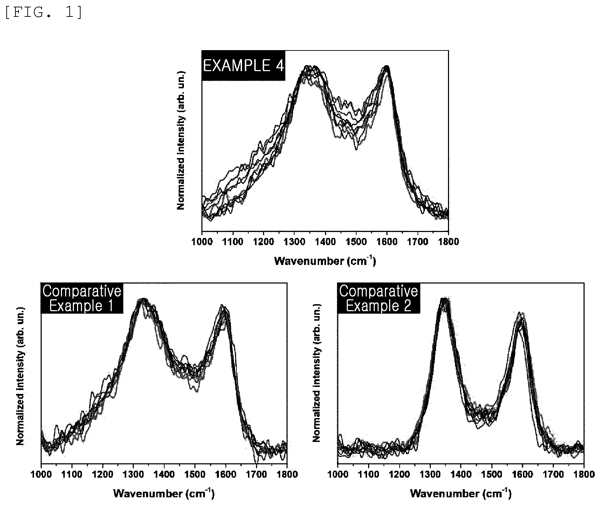

FIG. 1 illustrates the I_{D}/I_{G} ratio of the intensity of the D-band peak and the G-band peak of the carbon coating layer. Table 2 below lists the ID/IG ratio of Comparative Examples 1 and 2 and Example 1, as well as the maximum, minimum, average, and deviation values of the full width at half maximum (FWHM) of the D-band peak and the G-band peak, and the average value F_{G} of the full width at half maximum of the G-band excluding the maximum and minimum values.

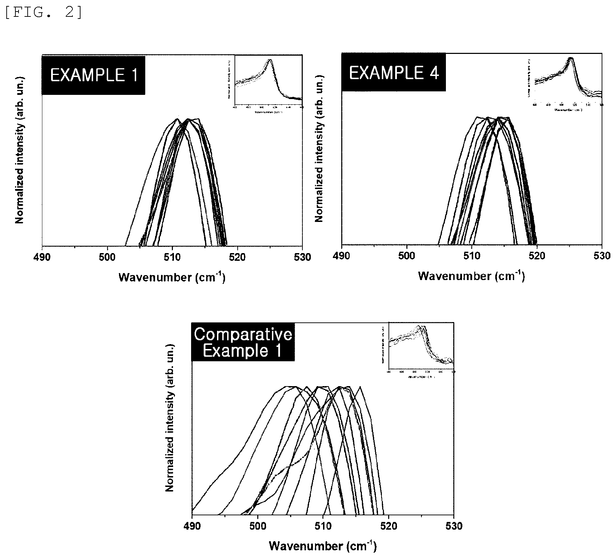

In addition, FIG. 2 illustrates the silicon Raman signals of the negative electrode material of Example 1, Example 4, and Comparative Example 1. Table 3 below lists the maximum, minimum, average, and standard deviation values of the center wavenumber of the Raman peak of the silicon nanocrystal in the Raman signals according to Example 1, Example 4, and Comparative Example 1.

**[Table 2]**

| Division | | Comparative Example | | Example | | | | |
|---|---|---|---|---|---|---|---|---|
| | | 1 | 2 | 1 | 2 | 3 | 4 | 5 |
| I_{D}/I_{G} | Maximum | 1.11 | 1.24 | 1.07 | 1.04 | 0.98 | 1.06 | 1.22 |
| | Minimum | 1.06 | 1.11 | 0.96 | 0.89 | 0.81 | 0.97 | 1.05 |
| | Average | 1.09 | 1.17 | 1.00 | 0.95 | 0.42 | 1.01 | 1.12 |
| | Deviation | 0.02 | 0.04 | 0.03 | 0.03 | 0.02 | 0.03 | 0.04 |
| F_{D}/F_{G} | Maximum | 2.02 | 1.23 | 2.18 | 2.21 | 1.98 | 2.18 | 1.68 |
| | Minimum | 1.86 | 1.18 | 1.94 | 1.95 | 1.73 | 1.92 | 1.21 |
| | Average | 1.97 | 1.21 | 2.07 | 2.10 | 1.83 | 2.05 | 1.45 |
| | Deviation | 0.05 | 0.02 | 0.08 | 0.07 | 0.03 | 0.07 | 0.15 |
| F_{G}(cm⁻¹) | Average | 105.2 | 101.7 | 69.5 | 80.7 | 92.7 | 91.6 | 98.8 |

**[Table 3]**

| Division | Center Wavenumber (cm⁻¹) of Raman Peak of Silicon Nanocrystal | | | |
|---|---|---|---|---|
| | Maximum | Minimum | Average | Deviation |
| Example 1 | 514.0 | 510.8 | 512.6 | 1.1 |
| Example 2 | 513.8 | 509.9 | 511.5 | 1.1 |
| Example 3 | 514.5 | 510.3 | 512.9 | 1.2 |
| Example 4 | 515.5 | 511.8 | 513.8 | 1.3 |
| Example 5 | 514.1 | 508.5 | 511.8 | 1.5 |
| Compara tive Example 1 | 515.7 | 505.4 | 510.5 | 3.5 |
| Compara tive Example 2 | 514.4 | 505.3 | 509.7 | 3.3 |
| Compara tive Example 3 | 514.2 | 510.6 | 512.4 | 1.1 |

Referring to FIG. 1 and Table 2, it was confirmed that the negative electrode material according to an embodiment has an average I_{D}/I_{G} value of about 1 and satisfies an average full width at half maximum (FWHM) of 1.3 or more. Referring to FIG. 2 and Table 3, it was confirmed that the negative electrode material according to an embodiment satisfies that a difference between a maximum value and a minimum value of a center wavenumber of a Raman peak of silicon nanocrystals is less than 3. On the other hand, it could be confirmed that the negative electrode material according to the comparative example is generally non-uniform, with a difference between a maximum value and a minimum value of a center wavenumber of a Raman peak of silicon nanocrystals being 3 or more.

### 2. Infrared Spectroscopic Analysis

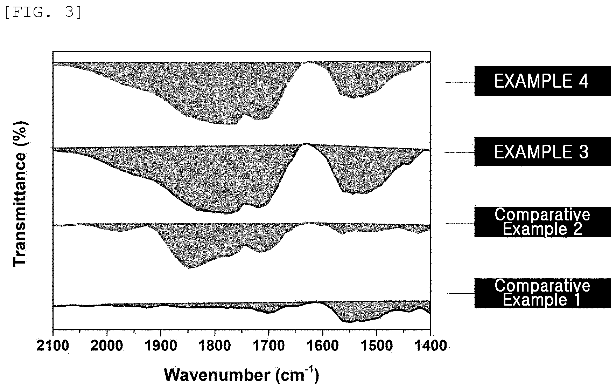

Using Fourier transform infrared spectrum (FTIR), FTIR measurement results according to Example 4 and Comparative Examples 1 to 3 were illustrated in FIG. 3. An area A₁ of a peak at a first wavenumber and an area A₂ of a peak at a second wavenumber were measured, and a ratio A₂/A₁ thereof was shown in Table 4 below.

**[Table 4]**

| Division | FTIR First Wavenumber Peak Area (A₁), Second Wavenumber Peak Area (A₂), and A2/A1 | | |
|---|---|---|---|
| | A₁ | A₂ | A₂/A₁ |
| Example 1 | 2.256 | 9.953 | 4.412 |
| Example 2 | 1.841 | 9.417 | 5.115 |
| Example 3 | 0.871 | 5.725 | 6.573 |
| Example 4 | 1.579 | 6.631 | 4.199 |
| Example 5 | 1.338 | 9.274 | 6.931 |
| Comparati ve Example 1 | 0.732 | 0.195 | 0.266 |
| Comparati ve Example 2 | 0.420 | 3.013 | 7.174 |
| Comparati ve Example 3 | 2.601 | 8.003 | 3.077 |
| - First wavenumber: 1400 to 1625 cm⁻¹ | | | |
| - Second wavenumber: 1625 to 2100 cm⁻¹ | | | |

Referring to FIG. 3 and Table 4, the examples confirmed that the area A₂ is larger than the area A₁, and that the ratio A₂/A₁ of the area A₁ of the peak of the first wavenumber to the area A₂ of the peak of the second wavenumber is 2 or more.

### <Battery Manufacturing>

Using the final negative electrode material powder as the active material, the active material:conductive material (carbon black): carboxymethyl cellulose (CMC) styrene butadiene rubber (SBR) were mixed in a weight ratio of 8:1:0.5:0.5, coated onto a copper foil 17 µm thick, and then dried at 90°C for 40 minutes. A CR2032 coin-type half-cell was manufactured by being punched into a diameter of 14 mm after drying, using metallic lithium having a diameter of 16 mm as a counter electrode, placing a separator having a diameter of 18 mm therebetween, and filling the cell with an electrolyte. The electrolyte was prepared by dissolving 1M of LiPF₆ in a solvent of EC ethylene carbonate (EC)/diethyl carbonate (DEC) mixed in a 1:1 volume ratio, and using 3 wt% of fluoroethylene carbonate (FEC) as an additive.

### <Battery Performance Evaluation>

The formation process was performed by charging the manufactured battery to 0.005 V at a constant current of 0.1 C (lithiation), followed by constant-voltage charging at 0.005 V until the current reached 0.01 C, and then discharging to 1.5 V at a constant current of 0.1 C (de-lithiation) (first formation step). Thereafter, the battery was charged again to 0.005 V at a constant current of 0.1 C (lithiation), followed by constant-voltage charging at 0.005 V until the current reached 0.01 C, and then discharged to 1.0 V at a constant current of 0.1 C (de-lithiation) (second formation step).

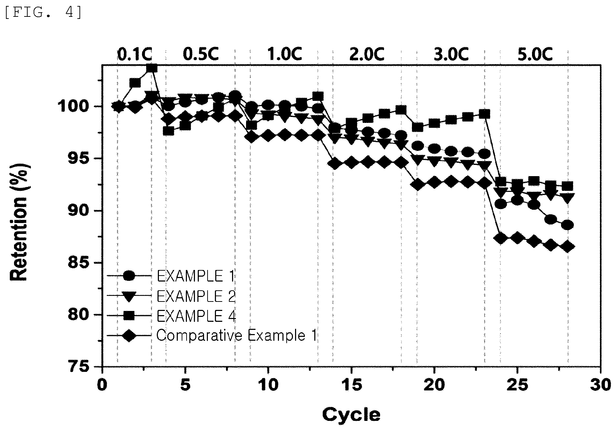

Charge/discharge cycle characteristics were evaluated using a half-cell having undergone the formation process. The half-cell was charged to 0.005 V at a constant current of 0.5 C (lithiation), followed by constant- voltage charging at 0.005 V until the current reached 0.05 C, and then discharged to 1.0 V at a constant current of 0.5 C (de-lithiation). The discharge capacity retention rate after 30 charge/discharge cycles was illustrated in FIG. 4. In addition, the discharge capacity of the first charge/discharge cycle is listed as the initial discharge capacity in Table 1. Further, the initial efficiency based on charge/discharge in the first formation step, and the capacity retention rate represented by (C25/C3) × 100 (where C25 denotes the discharge capacity in the 25th charge/discharge cycle and C3 denotes the discharge capacity in the third charge/discharge cycle) was listed in Table 5.

**[Table 5]**

| Division | Electrochemical Characteristics of Battery | | |
|---|---|---|---|
| | Initial Capacity (mAh/g) | Initial Efficiency (ICE, %) | Capacity Retention Rate (%) |
| Example 1 | 1702 | 75.9 | 97.3 |
| Example 2 | 1730 | 76.1 | 99.6 |
| Example 3 | 1706 | 76.3 | 94.5 |
| Example 4 | 1730 | 76.7 | 99.9 |
| Example 5 | 1710 | 75.1 | 91.9 |
| Comparati ve Example 1 | 1643 | 74.7 | 89.3 |
| Comparative Example 2 | 1651 | 74.2 | 84.9 |
| Comparati ve Example 3 | 1678 | 74.1 | 88.2 |

Referring to Table 5 and FIG. 4, it was confirmed that the negative electrode material according to the example exhibits excellent electrochemical characteristics compared to the comparative example, with an initial discharge capacity of 1700 mAh/g or more, an initial efficiency of 75% or more, and a charge/discharge capacity retention rate (rate capability) of 91% or more.

Hereinabove, although the present disclosure has been described by specific matters such as detailed components, example embodiments, and the accompanying drawings, they have been provided only for assisting in the entire understanding of the present disclosure. Therefore, the present disclosure is not limited to the example embodiments. Various modifications and changes may be made by those skilled in the art to which the present disclosure pertains from this description.

## Claims

1. A negative electrode material for a secondary battery, comprising:
a silicon-based core and a carbon coating layer positioned on a surface of the silicon-based core,
wherein, in Raman spectrum of the carbon coating layer, an intensity ratio (I_{D}/I_{G}) of a D-band peak to a G-band peak is 1.3 or less, and a ratio (F_{D}/F_{G}) of full width at half maximum (FWHM) of the D-band peak to the G-band peak is 1.3 or more, and
in infrared spectrum, an area (A₁) of a peak of a first wavenumber (n₁) in a range of 1400 to 1625±5 cm⁻¹ is smaller than an area (A₂) of a peak of a second wavenumber (n₂) in a range of 1625±5 to 2100 cm⁻¹.

2. The negative electrode material of claim 1, wherein the ratio (A₂/A₁) of the area (A₂) of the second wavenumber (n₂) to the area (A₁) of the peak of the first wavenumber (n₁) is 2 or more.

3. The negative electrode material of claim 1, wherein the silicon-based core includes a silicon oxide matrix and silicon nanocrystal dispersed and embedded in the silicon oxide matrix.

4. The negative electrode material of claim 1, wherein the intensity ratio (I_{D}/I_{G}) is smaller than the ratio (F_{D}/F_{G}) of the full width at half maximum.

5. The negative electrode material of claim 1, wherein the full width at half maximum (F_{G}) of the G band peak is 60 cm⁻¹ or more.

6. The negative electrode material of claim 3, wherein the following Equation 1 is satisfied based on a silicon Raman signal, $1 > WN \left(Si\right) / WN \left(ref\right)$ (Equation 1) where WN(ref) is a center wavenumber of the Raman peak of bulk single-crystal silicon, and WN(Si) is a center wavenumber of the Raman peak of the silicon nanocrystal contained in the negative electrode material.

7. The negative electrode material of claim 6, wherein the silicon-based core has a difference between a maximum value and a minimum value of the center wavenumber WN(Si) of the Raman peak of the silicon nanocrystal, measured at 10 random and different positions, of 5 cm⁻¹ or less.

8. The negative electrode material of claim 1, wherein a specific surface area of the negative electrode material is 10 m²/g or less.

9. The negative electrode material of claim 1, wherein the ratio (F_{D}/F_{G}) of the full width at half maximum is 1.7 or more.

10. The negative electrode material of claim 1, wherein the carbon coating layer includes a plurality of carbon nanoparticles.

11. The negative electrode material of claim 10, wherein the carbon coating layer includes a dispersed phase including a plurality of carbon nanoparticles and a continuous phase made of carbon that physically binds the dispersed phase.

12. The negative electrode material of claim 1, wherein the carbon coating layer is included in an amount of 0.5 to 8 wt% of the total weight of the negative electrode material.

13. The negative electrode material of claim 1, wherein the carbon coating layer is derived from coal tar or petroleum residue oil.

14. The negative electrode material of claim 1, wherein a particle size D₁ of the negative electrode material is 1.2 to 3.5 µm, and D₁₀/D₁ is 1.3 to 3.

15. The negative electrode material of claim 1, wherein a particle size D₉₀ of the negative electrode material is 8.5 to 14 µm, and D₉₉/D₉₀ is 1.1 to 2.5.

16. A secondary battery comprising the negative electrode material for a secondary battery of any one of claims 1 to 15.
